# EUROPÄISCHE PATENTSCHRIFT

(11) **EP 3 916 493 B1**
(45) Veröffentlichungstag und Bekanntmachung des Hinweises auf die Patenterteilung: **20.03.2024**
(21) Anmeldenummer: 21174580.7
(22) Anmeldetag: 19.05.2021
(51) Int. Cl.: G06N 3/084, G06N 5/02, G05B 13/02, G05B 13/04

(54) **PROGNOSE EINES SYSTEMZUSTANDS EINES TECHNISCHEN SYSTEMS**
PROGNOSIS OF A STATE OF A TECHNICAL SYSTEM
PRÉVISION D'UN ÉTAT D'UN SYSTÈME TECHNIQUE

(30) Priorität: 26.05.2020 DE 102020206575
(43) Veröffentlichungstag der Anmeldung: 01.12.2021
(73) Patentinhaber: Siemens Aktiengesellschaft, 80333 München (DE)
(72) Erfinder: Botero Halblaub, Andrés, 85614 Kirchseeon (DE); Brandstetter, Veronika, 81673 München (DE); Röhrl, Manuel, 93161 Sinzing (DE)
(74) Vertreter: Siemens Patent Attorneys

(56) Entgegenhaltungen:
- DE-T5-112017 008 018
- US-A1- 2002 011 089
- DUY NGUYEN-TUONG ET AL: "Using model knowledge for learning inverse dynamics", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3. Mai 2010 (2010-05-03), Seiten 2677-2682, XP031743793, ISBN: 978-1-4244-5038-1
- GU D ET AL: "Neural predictive control for a car-like mobile robot", ROBOTICS AND AUTONOMOUS SYSTEMS, ELSEVIER BV, AMSTERDAM, NL, Bd. 39, Nr. 2, 31. Mai 2002 (2002-05-31), Seiten 73-86, XP004352943, ISSN: 0921-8890, DOI: 10.1016/S0921-8890(02)00172-0
- BUMJIN SONG ET AL: "Neural network model based control of a flexible link manipulator", PROCEEDINGS / 1998 IEEE INTERNATIONAL CONFERENCE ON ROBOTICS AND AUTOMATION, MAY 16 - 20, 1998, KATHOLIEKE UNIVERSITEIT LEUVEN, LEUVEN, BELGIUM, IEEE, NEW YORK, NY, USA, Bd. 1, 16. Mai 1998 (1998-05-16), Seiten 812-817, XP010280999, DOI: 10.1109/ROBOT.1998.677085 ISBN: 978-0-7803-4300-9

## Beschreibung

Die Erfindung betrifft ein Verfahren zur Konfiguration einer Prognosevorrichtung zur Prognose eines Systemzustands eines technischen Systems, ein Verfahren zum Steuern eines technischen Systems mittels einer derartigen Prognosevorrichtung, eine Prognosevorrichtung, ein Steuersystem und ein Computerprogrammprodukt.

Für eine Vielzahl von technischen Anwendungen bzw. für technische Systeme können computergestützte Simulationen eingesetzt werden, die einen Systemzustand reproduzieren bzw. prognostizieren. Beispielsweise kann dabei das physikalische Verhalten eines technischen Systems in Abhängigkeit einer auf das System einwirkenden Kraft modelliert werden. Ein computergestütztes Simulationsmodell kann insbesondere als physikalisches Modell oder als ein datenbasiertes Modell realisiert werden. Dabei sind physikalische Modelle in der Regel sehr komplex, rechenintensiv und/oder bringen numerische Herausforderungen mit sich. Datenbasierte Modelle dagegen benötigen eine große Anzahl an Messdaten zum Training und/oder Kalibrieren der Modelle. Somit ist eine Anwendung solcher Simulationsmodelle für technische Systeme als Prognose- und/oder Diagnosewerkzeug parallel zum Betrieb einer realen Maschine oft limitiert.

Ein Dokument NGUYEN-TUONG, DUY ET AL: "Using Model Knowledge for Learning Inverse Dynamics", 2010 IEEE International Conference on Robotics and Automation, Anchorage Convention District, 3-8 May 2010, Anchorage, Alaska, USA, pp: 2677-2682 präsentiert eine Ergänzung eines physikalischen Modells zur Modellierung eines Roboters mittels eines Regressionsmodells, um nicht-lineare Effekte zu modellieren.

Es ist daher eine Aufgabe der Erfindung, eine computergestützte Modellierung von technischen Systemen zu verbessern.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein Verfahren zum Konfigurieren einer Prognosevorrichtung für ein technisches System zum Prognostizieren eines Systemzustands eines technischen Systems, wobei die Prognosevorrichtung derart eingerichtet ist, ein physikalisches Verhalten des technischen Systems in Abhängigkeit einer auf das technische System einwirkenden Kraft zu prognostizieren, wobei die einwirkende Kraft durch einen Approximator bestimmt wird, umfassend die Verfahrensschritte:
a. Einlesen einer Zeitreihe von gemessenen Systemzuständen des technischen Systems,
b. Einstellen von Konfigurationsparametern des Approximators, indem iterativ
   - das physikalische Verhalten des technischen Systems ausgehend von einem ersten eingelesenen Systemzustand durch die Prognosevorrichtung prognostiziert und ein resultierender Systemzustand zu einem gegebenen Zeitpunkt ausgegeben wird,
   - eine Abweichung dieses resultierenden Systemzustands von einem gemessenen Systemzustands zu dem gegebenen Zeitpunkt ermittelt wird,
   - die Konfigurationsparameter des Approximators derart modifiziert werden, dass die ermittelte Abweichung minimiert wird bis ein vorgegebener Schwellwert unterschritten wird,
   - und der gemäß den ermittelten Konfigurationsparametern modifizierte Approximator bereitgestellt wird,
      und
c. Bereitstellen der Prognosevorrichtung umfassend den modifizierten Approximator.

Ein technisches System kann beispielsweise eine Maschine/Werkzeugmaschine, eine autonome Maschine, ein autonomes Fahrzeug, ein Roboter oder eine Anlage/Fabrikanalage/Produktionsanlage/verfahrenstechnische Anlage, technische Infrastrukturen, wie z.B. Verteilnetzwerke für Wasser, Fernwärme oder Strom, sein.

Das erfindungsgemäße Verfahren kann insbesondere computergestützt realisiert sein. Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Auch kann unter einem Prozessor ein virtualisierter Prozessor, eine virtuelle Maschine oder eine Soft-CPU verstanden werden.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle, wie z. B. eine Netzwerkschnittstelle oder eine Schnittstelle zu einer Speichereinheit. Über eine solche Schnittstelle können beispielsweise beim Bereitstellen entsprechende Daten und/oder Informationen übermittelt und/oder gesendet und/oder abgerufen und/oder empfangen werden. Beispielsweise kann der modifizierte bzw. rekonfigurierte Approximator als Datenstruktur bereitgestellt werden.

Die Prognosevorrichtung bzw. Einheiten der Prognosevorrichtung können insbesondere in Software und/oder Hardware realisiert sein. Die Prognosevorrichtung kann insbesondere dem technischen System zugeordnet sein und somit derart eingerichtet sein, das spezifische physikalische bzw. technische bzw. dynamische Verhalten des technischen Systems abzubilden. Die Prognosevorrichtung kann, insbesondere wenn sie ausschließlich in Software realisiert ist, auch als Prognosemodell oder als Simulator bezeichnet werden.

Die Prognosevorrichtung umfasst vorzugsweise ein computergestütztes physikalisches Modell des technischen Systems, wobei die mindestens eine auf das technische System einwirkende Kraft durch den Approximator beschrieben wird, d.h. die Prognosevorrichtung umfasst ebenso den Approximator. Damit kann ein zukünftiger Systemzustand des technischen Systems prognostiziert werden. Der Approximator kann beispielsweise als ein künstliches neuronales Netz realisiert sein, das als Ausgangsgröße die auf das technische System einwirkende Kraft bestimmt.

Die Prognosevorrichtung wird vorzugsweise spezifisch für ein jeweiliges technisches System konfiguriert, um eine Prognose eines künftigen Systemzustands mit hoher Genauigkeit zu ermöglichen. Dabei werden insbesondere Konfigurationsparameter des Approximators derart eingestellt, dass ein gemessenes physikalisches Verhalten des technischen Systems möglichst genau durch die Prognosevorrichtung reproduziert wird.

Es ist somit ein Vorteil der Erfindung, dass sowohl Wissen/Information über das physikalische Verhalten des technischen Systems als auch Informationen aus Messungen genutzt werden, um das physikalische Verhalten des technischen Systems unter Einfluss einer einwirkenden Kraft abzubilden. Insbesondere kann das physikalische Verhalten auf Basis einer gewöhnlichen Differentialgleichung beschrieben werden. Eine auf das technische System einwirkende Kraft wird mittels des Approximators angenähert, wobei der Approximator beispielsweise einen Term bzw. eine Komponente der Differentialgleichung beschreibt.

Mittels des Approximators kann insbesondere eine Kraft bestimmt werden, deren physikalisch bzw. mathematisch exakte Beschreibung nicht oder nur teilweise möglich ist. Dies ermöglicht insbesondere eine höhere Genauigkeit, bessere physikalische Konsistenz und/oder bessere Extrapolationsfähigkeiten des Prognosemodells für das technische System.

Die Prognosevorrichtung erlaubt demnach eine Modellierung des technischen Systems, die weniger komplex zu erstellen ist als ein ausschließlich physikalisches Modell. Im Vergleich zu einem rein datenbasierten Modell erlaubt die Prognosevorrichtung eine Modellierung mit einer geringeren Datenmenge. Eine Prognose für ein technisches System mittels der Prognosevorrichtung kann somit insbesondere auch betriebsbegleitend und/oder parallel zu einer Engineeringphase des technischen Systems durchgeführt werden. So kann die Prognosevorrichtung insbesondere auch auf einem Edge-Gerät realisiert werden.

In einer Ausführungsform des Verfahrens kann das physikalische Verhalten des technischen Systems auf Basis eines Differentialgleichungssystems prognostiziert werden.

Die Prognosevorrichtung kann beispielsweise als ein computergestütztes Simulationsmodell für das technische System realisiert sein, das auf Basis eines Differentialgleichungssystems das physikalische Verhalten simuliert, wobei der Approximator einen Kraftterm des Differentialgleichungssystem bestimmt.

In einer Ausführungsform des Verfahrens kann das physikalische Verhalten des technischen Systems durch Lösen der Differentialgleichungssystems ausgehend von dem ersten eingelesenen Systemzustand prognostiziert werden.

Die Prognosevorrichtung kann als Prognosemodell auf Basis physikalischer Grundprinzipien (engl. First principles) eingerichtet sein und somit das physikalische Verhalten des technischen Systems durch Differentialgleichungen beschreiben. Die Lösung eines solchen Differentialgleichungssystems kann numerisch mittels eines Lösers (engl. Solver) erfolgen, um einen Systemzustand zu einem vorgegebenen Zeitpunkt zu ermitteln.

In einer Ausführungsform des Verfahrens kann der Approximator als ein künstliches neuronales Netz realisiert werden, wobei die Konfigurationsparameter Werte von Gewichten des künstlichen neuronalen Netzes sind.

In einer Ausführungsform des Verfahrens kann das künstliche neuronale Netz derart eingerichtet sein, die einwirkende Kraft abhängig von Eingangsgrößen der Differentialgleichung zu bestimmen.

Dabei kann das künstliche neuronale Netz mittels Messdaten insbesondere derart trainiert werden, dass das künstliche neuronale Netz die zugrundeliegenden physikalischen Gleichungen lernt bzw. reproduziert. Dazu ist das künstliche neuronale Netz vorzugsweise gemäß zugrundeliegenden Differentialgleichungen strukturiert. Das künstliche neuronale Netz lernt demnach vorzugsweise nicht die Zuordnung bzw. Abbildung eines Systemzustands auf einen zeitlich nachfolgenden Systemzustand.

In einer Ausführungsform des Verfahrens kann die einwirkende Kraft eine nicht-konservative Kraft sein.

Insbesondere kann eine nicht-konservative Kraft durch den Approximator und die konservativen Kräfte durch physikalische Parameter beschrieben werden. Beispielsweise kann mittels der Prognosevorrichtung ein physikalisches Verhalten eines technischen Systems unter Einfluss einer Reibungskraft modelliert und prognostiziert werden.

In einer Ausführungsform des Verfahrens kann das iterative Einstellen der Konfigurationsparameter des Approximators mittels eines stochastischen Gradientenabstiegsverfahrens durchgeführt werden.

Die Konfiguration der Prognosevorrichtung umfasst insbesondere das iterative Einstellen der Konfigurationsparameter des Approximators. In anderen Worten, die Prognosevorrichtung bzw. das Prognosemodell wird darauf trainiert eine Abweichung zwischen einem prognostiziertem und einem gemessenen Systemzustand des technischen Systems zu minimieren. Dies kann als Optimierungsproblem formuliert werden, so dass mittels Backpropagation mit einem stochastischen Gradientenabstiegsverfahren die Konfigurationsparameter des Approximators bestimmt werden. Die Gradienten können durch automatisches Differenzieren bestimmt werden. Vorzugsweise sind dafür das Differentialgleichungssystem und der Löser differenzierbar.

Gemäß einem zweiten Aspekt betrifft die Erfindung ein Verfahren zum Steuern eines technischen Systems mittels einer bereitgestellten Prognosevorrichtung, wie vorstehend beschrieben, umfassend die Schritte:
a. Einlesen eines aktuellen Systemzustands des technischen Systems,
b. Ermitteln eines zukünftigen Systemzustands abhängig von dem aktuellen Systemzustand mittels der Prognosevorrichtung, wobei die Prognosevorrichtung derart eingerichtet ist, ein physikalisches Verhalten des technischen Systems in Abhängigkeit einer auf das technische System einwirkenden Kraft zu prognostizieren, wobei die einwirkende Kraft durch einen Approximator bestimmt wird,
c. Ermitteln eines Steuerbefehls zum Steuern des technischen Systems in Abhängigkeit des zukünftigen Systemzustands,
   und
d. Ausgeben des Steuerbefehls an eine Steuereinheit des technischen Systems.

In einer Ausführungsform kann das technische System gemäß dem Steuerbefehl gesteuert werden.

Somit kann das technische System auf Basis eines von der Prognosevorrichtung prognostizierten Systemzustands gesteuert werden. Die Prognosevorrichtung ist dabei vorzugsweise spezifisch für das technische System auf Basis von Messdaten des technischen Systems konfiguriert. Beispielsweise ist der Approximator als ein künstliches neuronales Netz realisiert, das auf Basis von gemessenen Systemzuständen des technischen Systems trainiert ist. Somit ist die Prognosevorrichtung eingerichtet, in Abhängigkeit eines gegebenen aktuellen Systemzustands einen zukünftigen Systemzustand zu prognostizieren, wobei die Prognosevorrichtung das physikalische Verhalten des technischen Systems durch die Prognosevorrichtung beschrieben wird.

Gemäß einem weiteren Aspekt betrifft die Erfindung eine Prognosevorrichtung für ein technisches System zum Prognostizieren eines Systemzustands des technischen Systems, die derart eingerichtet ist, ein physikalisches Verhalten des technischen Systems in Abhängigkeit einer auf das technische System einwirkenden Kraft ausgehend von einem ersten eingelesenen Systemzustand zu prognostizieren, wobei die einwirkende Kraft durch einen Approximator bestimmt wird, und einen resultierenden Systemzustand auszugeben, wobei Konfigurationsparameter des Approximators mittels gemessener Systemzustände derart eingestellt sind, eine Abweichung eines prognostizierten Systemzustands von einem gemessenen Systemzustand zu minimieren.

Die Prognosevorrichtung kann insbesondere in Software und/oder in Hardware realisiert sein. Ist die Prognosevorrichtung zumindest teilweise in Hardware ausgestaltet, kann sie insbesondere mindestens einen Prozessor umfassen.

Gemäß einem weiteren Aspekt betrifft die Erfindung ein Steuersystem eines technischen Systems, umfassend
- eine erste Schnittstelle, die derart eingerichtet ist, das Steuersystem an eine erfindungsgemäße Prognosevorrichtung zu koppeln,
- eine zweite Schnittstelle, die derart eingerichtet ist, einen aktuellen Systemzustand des technischen Systems einzulesen,
- eine Prognoseeinheit, die derart eingerichtet ist, die Prognosevorrichtung anzusteuern und mittels der Prognosevorrichtung einen zukünftigen Systemzustand des technischen Systems abhängig von dem aktuellen Systemzustand zu ermitteln,
- eine Steuereinheit, die derart eingerichtet ist, einen Steuerbefehl in Abhängigkeit des zukünftigen Systemzustands zu ermitteln, und das technische System gemäß dem Steuerbefehl zu steuern.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen beispielhaft dargestellt und werden anhand der nachfolgenden Beschreibung näher erläutert. Es zeigen:
- Fig. 1:: ein Ausführungsbeispiel des erfindungsgemäßen Verfahrens zum Konfigurieren einer Prognosevorrichtung zum Prognostizieren eines Systemzustands eines technischen Systems als Ablaufdiagramm;
- Fig. 2:: ein Ausführungsbeispiel des erfindungsgemäßen Verfahrens zum Steuern eines technischen Systems als Ablaufdiagramm;
- Fig. 3:: ein Ausführungsbeispiel der erfindungsgemäßen Prognosevorrichtung und des erfindungsgemäßen Steuersystems; und
- Fig. 4:: ein Ausführungsbeispiel der erfindungsgemäßen Prognosevorrichtung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

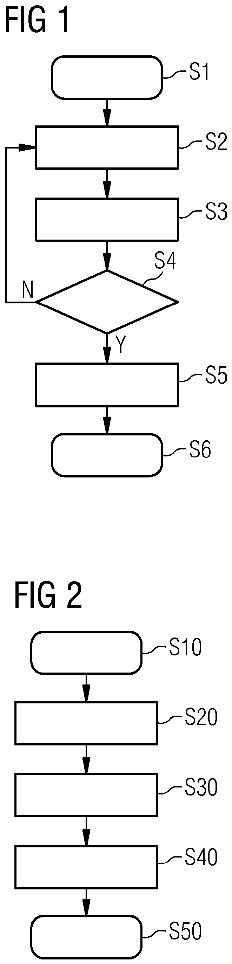

Figur 1 zeigt ein Ausführungsbeispiel des erfindungsgemäßen Verfahrens zum Konfigurieren einer Prognosevorrichtung für ein technisches System zum Prognostizieren eines Systemzustands des technischen Systems als Ablaufdiagramm.

Die Prognosevorrichtung ist derart eingerichtet, das physikalische Verhalten des technischen Systems in Abhängigkeit einer auf das technische System einwirkenden Kraft zu modellieren und/oder damit einen zukünftigen Systemzustand des technischen Systems zu prognostizieren. Die einwirkende Kraft, insbesondere eine nicht-konservative Kraft, wird dabei durch einen Approximator bestimmt. Unter einer "Prognosevorrichtung" kann insbesondere auch ein computergestütztes Prognosemodell auf Basis eines Differentialgleichungssystems verstanden werden, wobei ein Kraftterm des Differentialgleichungssystems durch den Approximator bestimmt wird. Der Approximator ist vorzugsweise als ein künstliches neuronales Netz realisiert.

Unter "Konfigurieren der Prognosevorrichtung" kann insbesondere auch Trainieren und Einrichten des Prognosemodells, insbesondere des künstlichen neuronalen Netzes, verstanden werden. Das Training erfolgt auf Basis einer Zeitreihe von gemessenen Systemzuständen des technischen Systems. Somit wird die Prognosevorrichtung spezifisch für das technische System konfiguriert und derart zur Prognose und/oder Steuerung bereitgestellt.

Im ersten Schritt S1 wird eine Zeitreihe gemessener Systemzustände des technischen Systems eingelesen. Die gemessenen Systemzustände werden vorzugsweise mittels Sensoren am technischen System erfasst und bilden das dynamische Verhalten des technischen Systems unter Einfluss einer Kraft ab.

Beispielsweise ist das technische System ein Roboterarm, dessen Dynamik mittels der Prognosevorrichtung modelliert und prognostiziert werden soll. Die Dynamik des Roboterarms kann insbesondere durch ein Differentialgleichungssystem beschrieben werden. Ein Systemzustand des Roboterarms ist beispielsweise ein Bewegungszustand zu einem gegebenen Zeitpunkt. Eine Änderung des Bewegungszustands kann durch eine mindestens eine einwirkende Kraft bestimmt sein. Eine solche auf den Roboterarm einwirkende Kraft, wie z.B. eine Reibungskraft, wird gemäß der Erfindung durch einen Approximator, z.B. ein künstliches neuronales Netz, beschrieben. Das neuronale Netz ist dabei gemäß der Differentialgleichung strukturiert. Der Approximator wird dazu mittels Messdaten der Dynamik des Roboterarms konfiguriert, um die einwirkende Kraft zu approximieren. Indem Konfigurationsparameter des Approximators iterativ angepasst werden (Schritte S2 bis S4), kann die Approximation der einwirkenden Kraft verbessert werden. Der Approximator ermöglicht insbesondere auch Kräfte, die nicht auf einfach Weise durch physikalische Gleichungen und Parameter beschrieben werden können, zu beschreiben.

Die Prognosevorrichtung wird dazu zunächst mit vorgegebenen Konfigurationsparametern für den Approximator bereitgestellt. Beispielsweise können die initialen Konfigurationsparameter des Approximators die einwirkende Kraft lediglich in erster Näherung bzw. mit einer großen Unsicherheit bestimmen.

Im nächsten Schritt S2 wird das physikalische Verhalten des technischen Systems ausgehend von einem ersten eingelesenen Systemzustand durch die Prognosevorrichtung modelliert, um einen weiteren Systemzustand zu einem nachfolgenden Zeitpunkt auszugeben. Beispielsweise wird das zugrundeliegende Differentialgleichungssystem numerisch gelöst und integriert, um diesen resultierenden Systemzustand auszugeben.

Im nächsten Schritt S3 wird eine Abweichung zwischen diesem resultierenden Systemzustand und einem gemessenen Systemzustand zum entsprechenden Zeitpunkt ermittelt und ausgegeben. Eine Abweichung kann beispielsweise als Differenz oder als mittlerer quadratischer Fehler ermittelt werden.

Im nächsten Schritt S4 wird der Approximator rekonfiguriert, wobei die Konfigurationsparameter des Approximators modifiziert werden, so dass die Abweichung verringert wird. Ist der Approximator als ein künstliches neuronales Netz ausgestaltet, werden hierbei die Gewichte bzw. die Werte der Gewichte der künstlichen Neuronen derart angepasst, dass die Abweichung minimiert wird. Bei Schritt S4 wird insbesondere geprüft, ob die Abweichung einen vorgegeben Schwellwert unterschreitet. Wenn die Abweichung den vorgegebenen Schwellwert nicht unterschreitet, Fall N, werden die Konfigurationsparameter modifiziert und Schritt S2 und S3 wiederholt. Wenn die Abweichung den vorgegebenen Schwellwert unterschreitet, Fall Y, wird der gemäß der zuletzt modifizierten Konfigurationsparameter angepasste Approximator bereitgestellt.

Die Schritte S2 bis S4 werden somit vorzugsweise iterativ durchgeführt bis die Abweichung zwischen dem resultierenden Systemzustand und dem gemessenen Systemzustand den vorgegebenen Schwellwert unterschreitet. Die iterative Optimierung der Konfiguration der Prognosevorrichtung erfolgt vorzugsweise mittels eines stochastischen Gradientenabstiegsverfahrens. Damit lernt der Approximator die zugrundeliegenden physikalischen Gleichungen.

Auf diese Weise werden der Approximator und somit die Prognosevorrichtung an die physikalischen Eigenschaften des technischen Systems angepasst. Die derart konfigurierte Prognosevorrichtung kann zur Prognose eines Systemzustands des technischen Systems bereitgestellt werden, Schritt S5.

Figur 2 zeigt ein Ausführungsbeispiel des erfindungsgemäßen Verfahrens zum Steuern eines technischen Systems als Ablaufdiagramm. Vorzugsweise wird das Verfahren durch ein Steuersystem des technischen Systems durchgeführt, das mit einer Prognosevorrichtung gekoppelt ist. Die Prognosevorrichtung ist hierbei vorzugsweise nach einem Verfahren wie beispielhaft anhand Figur 1 beschrieben, konfiguriert. Die Prognosevorrichtung ist demnach konfiguriert, das physikalische Verhalten des technischen Systems in Abhängigkeit einer auf das technische System einwirkenden Kraft abzubilden und damit einen zukünftigen Systemzustand zu prognostizieren. Die einwirkende Kraft wird dabei durch einen dafür trainierten Approximator bestimmt.

Im ersten Schritt S10 wird ein aktueller Systemzustand des technischen Systems mittels eines Sensors erfasst und als Datensatz eingelesen. Im nächsten Schritt S20 wird ausgehend von diesem aktuellen Systemzustand mittels der konfigurierten Prognosevorrichtung ein zukünftiger Systemzustand prognostiziert. Dabei wird das physikalische Verhalten des technischen Systems ausgehend von dem aktuellen Systemzustands prognostiziert, wobei eine auf das technische System einwirkende Kraft durch den Approximator bestimmt wird. Dazu sind Konfigurationsparameter des Approximators mittels gemessener Systemzustände derart konfiguriert, dass eine Abweichung eines prognostizierten Systemzustands von einem gemessenen Systemzustand minimiert wird. Dies ermöglicht eine detaillierte Vorhersage eines folgenden Systemzustands des technischen Systems. Abhängig von dem prognostizierten Systemzustand wird im nächsten Schritt S30 ein Steuerbefehl für das technische System abgeleitet. Der Steuerbefehl wird im nächsten Schritt S40 an eine Steuereinheit des Steuersystems ausgegeben. Nachfolgend S50 kann das technische System gemäß dem Steuerbefehl gesteuert werden. Es kann somit eine modell-basierte Regelung des technischen Systems erzielt werden. Diese kann insbesondere betriebsbegleitend durchgeführt werden.

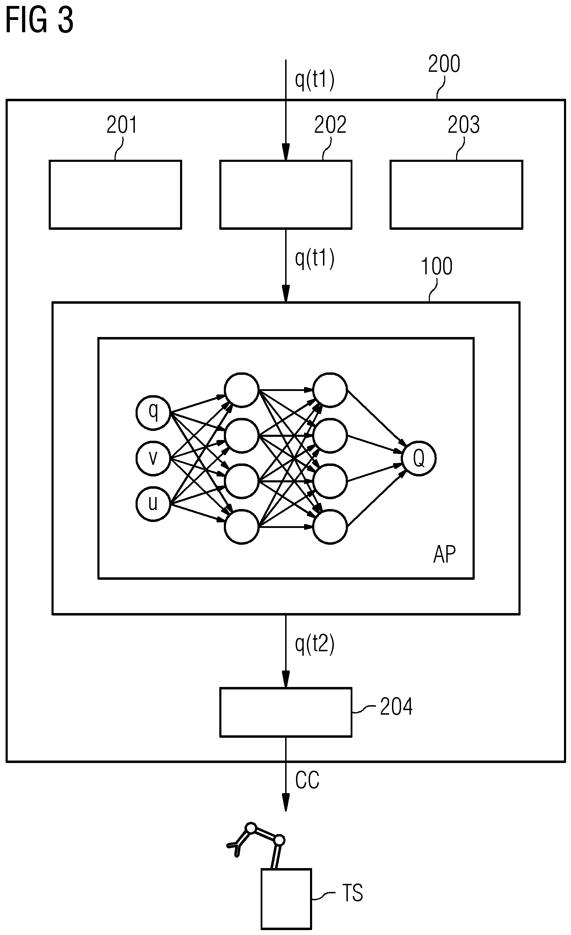

Figur 3 zeigt ein Ausführungsbeispiel der erfindungsgemäßen Prognosevorrichtung 100 und des erfindungsgemäßen Steuersystems 200 für ein technisches System TS, die vorzugsweise miteinander gekoppelt sind. Beispielsweise kann die Prognosevorrichtung 100 im Steuersystem 200 integriert sein.

Die Prognosevorrichtung 100 ist derart konfiguriert, ein physikalisches Verhalten des technischen Systems TS in Abhängigkeit einer auf das technische System TS einwirkenden Kraft ausgehend von einem gemessenen Systemzustand q(t1) zu prognostizieren. Dabei wird die Krafteinwirkung durch einen Approximator AP bestimmt. Das physikalische Verhalten des technischen Systems kann insbesondere durch ein Differentialgleichungssystem beschrieben werden, wobei ein Kraftterm Q, der die einwirkende Kraft bestimmt, durch den Approximator repräsentiert wird.

Der Approximator AP ist dabei derart konfiguriert, eine Abweichung eines prognostizierten Systemzustands von einem gemessenen Systemzustand zu einem bestimmten Zeitpunkt zu minimieren. Der Approximator AP ist beispielsweise als ein künstliches neuronales Netz realisiert. Die Eingangsgrößen des neuronalen Netzes u, q, v entsprechen insbesondere den Eingangsgrößen des Differentialgleichungssystems. Die Ausgangsgröße des neuronalen Netzes ist der Kraftterm Q, der die einwirkende Kraft beschreibt. Das neuronale Netz ist somit vorzugsweise darauf trainiert, die zugrundeliegenden physikalischen Gleichungen zu reproduzieren.

Die für das technische System TS spezifisch konfigurierte Prognosevorrichtung 100 kann folglich in Abhängigkeit des eingelesenen aktuellen Systemzustands q(t1) einen prognostizierten Systemzustand q(t2) ausgeben. Dieser prognostizierte Systemzustand q(t2) wird dem Steuersystem 200 bereitgestellt.

Das Steuersystem 200 umfasst eine erste Schnittstelle 201, eine zweite Schnittstelle 202, eine Prognoseeinheit 203 und eine Steuereinheit 204. Die Einheiten bzw. Schnittstellen des Steuersystems 200 sind vorzugsweise alle miteinander verbunden, so dass sie Daten austauschen können.

Die erste Schnittstelle 201 ist derart eingerichtet das Steuersystem 200 mit der Prognosevorrichtung 100 zu koppeln. Beispielsweise kann die Prognosevorrichtung 100 als Software realisiert sein, die vom Steuersystem 200 geladen wird.

Die zweite Schnittstelle 202 ist derart eingerichtet den gemessenen aktuellen Systemzustand q(t1) (zu einem Zeitpunkt t1) des technischen Systems einzulesen und beispielsweise an die Prognosevorrichtung 100 weiterzuleiten.

Die Prognoseeinheit 203 ist derart eingerichtet, die Prognosevorrichtung 100 anzusteuern, d.h. die Prognoseeinheit 203 kann beispielsweise mit der Prognosevorrichtung 100 Daten austauschen. So stößt die Prognoseeinheit 203 beispielsweise eine betriebsbegleitende Prognose des physikalischen Verhaltens des technischen Systems durch die Prognosevorrichtung an und erfasst den prognostizierten Systemzustand q(t2) (zu einem Zeitpunkt t2). Der prognostizierter Systemzustand q(t2) wird an die Steuereinheit 204 übermittelt, die davon abhängig einen Steuerbefehl CC ermittelt. Beispielsweise kann der Steuerbefehl CC aus einer Menge oder Liste von gespeicherten Steuerbefehlen in Abhängigkeit des prognostizierten Systemzustands q(t2) selektiert werden. Dazu kann beispielsweise eine Zuordnung eines Systemzustands zu einem jeweiligen Steuerbefehl vorgegeben sein. Das Steuersystem 200 kann das technische System TS gemäß dem Steuerbefehl CC steuern.

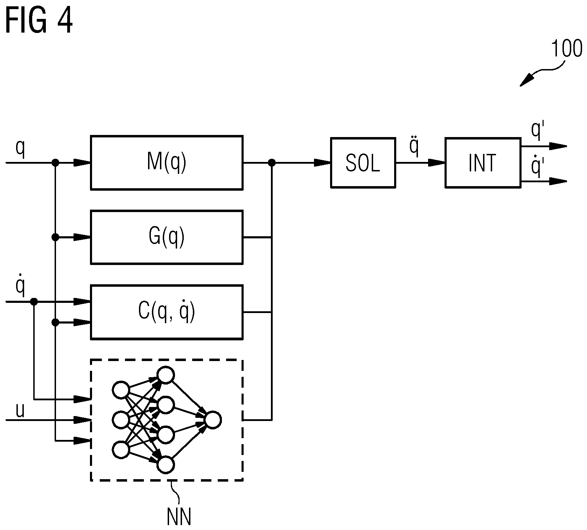

Figur 4 zeigt ein Ausführungsbeispiel der erfindungsgemäßen Prognosevorrichtung 100 für ein technisches System. Die Prognosevorrichtung 100 kann auch als ein Prognosemodell, insbesondere ein computergestütztes Simulationsmodell, verstanden werden. Das Prognosemodell ist vorzugsweise spezifisch für das technische System konfiguriert, um eine Prognose eines Systemzustands des technischen Systems mit hoher Genauigkeit zu ermöglichen.

Das Prognosemodell basiert vorzugsweise auf einem Differentialgleichungssystem, wie z.B. *M*(*q*)(*q̈*) + *C*(*q*,*q̇*) + *G*(*q*) = *Q*(*q*, *q̇*, *u*), wobei jede Komponente *M*(*q*)(*q̈*), *C*(*q, q̇*) und *G*(*q*) der Gleichung durch einen Approximator, wie z.B. ein künstliches neuronales Netz, oder durch physikalische Parameter beschrieben werden kann.

Die Komponente *Q*(*q*, *q̇*, *u*) beschreibt eine auf das technische System einwirkende, nicht-konservative Kraft. Diese Kraft wird in dieser Variante durch ein künstliches neuronales Netz NN beschrieben, das gemäß der Differentialgleichung strukturiert ist. Die Eingangsgrößen *q, q̇, u* des künstlichen neuronalen Netzes NN entsprechen den Eingangsgrößen der Differentialgleichung. Beim Training des künstlichen neuronalen Netzes NN wird somit die zugrundeliegende Differentialgleichung gelernt. Um einen zukünftigen Systemzustand *q', q̇'*des technischen Systems zu bestimmen, wird das Differentialgleichungssystem mittels eines numerischen Solvers SOL gelöst und anschließend integriert INT.

Das Prognosemodell 100 kann insbesondere an das technische System angepasst werden, indem die Gewichte des neuronalen Netzes iterativ in einem Optimierungsverfahren angepasst werden. Bei einem solchen Optimierungsverfahren wird das Differentialgleichungssystem gelöst und ein resultierenden Systemzustand *q', q̇'* ausgegeben. Dieser resultierende Systemzustand wird mit einem gemessenen Systemzustand verglichen und eine Abweichung bestimmt. Abhängig von der Größe der Abweichung werden die Werte der Gewichte des neuronalen Netzes modifiziert und somit die Beschreibung der einwirkenden Kraft sukzessive an die Messung angepasst.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum Konfigurieren einer Prognosevorrichtung für ein technisches System zum Prognostizieren eines Systemzustands des technischen Systems, wobei die Prognosevorrichtung derart eingerichtet ist, ein physikalisches Verhalten des technischen Systems in Abhängigkeit einer auf das technische System einwirkenden Kraft zu prognostizieren, wobei die einwirkende Kraft durch einen Approximator bestimmt wird, umfassend die Verfahrensschritte:
a. Einlesen (S1) einer Zeitreihe von gemessenen Systemzuständen des technischen Systems,
b. Einstellen von Konfigurationsparametern des Approximators, indem iterativ
- das physikalische Verhalten des technischen Systems ausgehend von einem ersten eingelesenen Systemzustand durch die Prognosevorrichtung prognostiziert und ein resultierender Systemzustand zu einem gegebenen Zeitpunkt ausgegeben wird (S2),
- eine Abweichung dieses resultierenden Systemzustands von einem gemessenen Systemzustand zu dem gegebenen Zeitpunkt ermittelt wird (S3),
- die Konfigurationsparameter des Approximators derart modifiziert werden (S4), dass die ermittelte Abweichung minimiert wird bis ein vorgegebener Schwellwert unterschritten wird,
- und der gemäß den ermittelten Konfigurationsparametern modifizierte Approximator bereitgestellt wird (S5),
wobei der Approximator als ein künstliches neuronales Netz realisiert wird, und wobei die Konfigurationsparameter Werte von Gewichten des künstlichen neuronalen Netzes sind,
und
c. Bereitstellen der Prognosevorrichtung umfassend den modifizierten Approximator (S6).

2. Verfahren nach Anspruch 1, wobei das physikalische Verhalten des technischen Systems auf Basis eines Differentialgleichungssystems prognostiziert wird.

3. Verfahren nach Anspruch 2, wobei das physikalische Verhalten des technischen Systems durch Lösen der Differentialgleichungssystems ausgehend von dem ersten eingelesenen Systemzustand prognostiziert wird.

4. Verfahren nach Anspruch 2 bis 3, wobei das künstliche neuronale Netz derart eingerichtet ist, die einwirkende Kraft abhängig von Eingangsgrößen der Differentialgleichung zu bestimmen.

5. Verfahren nach einem der vorhergehenden Ansprüche, wobei die einwirkende Kraft eine nicht-konservative Kraft ist.

6. Verfahren nach einem der vorhergehenden Ansprüche, wobei das iterative Einstellen der Konfigurationsparameter des Approximators mittels eines stochastischen Gradientenabstiegsverfahrens durchgeführt wird.

7. Verfahren zum Steuern eines technischen Systems mittels einer nach den Ansprüchen 1 bis 6 bereitgestellten Prognosevorrichtung, umfassend die Schritte:
a. Einlesen (S10) eines aktuellen Systemzustands des technischen Systems,
b. Ermitteln (S20) eines zukünftigen Systemzustands abhängig von dem aktuellen Systemzustand mittels der Prognosevorrichtung,
c. Ermitteln (S30) eines Steuerbefehls zum Steuern des technischen Systems in Abhängigkeit des zukünftigen Systemzustands,
und
d. Ausgeben (S40) des Steuerbefehls an eine Steuereinheit des technischen Systems.

8. Verfahren nach Anspruch 7, wobei das technische System gemäß dem Steuerbefehl gesteuert wird (S50).

9. Prognosevorrichtung (100) für ein technisches System zum Prognostizieren eines Systemzustands des technischen Systems, die derart eingerichtet ist, ein physikalisches Verhalten des technischen Systems in Abhängigkeit einer auf das technische System einwirkenden Kraft ausgehend von einem ersten eingelesenen Systemzustand zu prognostizieren, wobei die einwirkende Kraft durch einen Approximator (AP, NN) bestimmt wird, wobei der Approximator als ein künstliches neuronales Netz realisiert wird, und wobei die Konfigurationsparameter Werte von Gewichten des künstlichen neuronalen Netzes sind, und einen resultierenden Systemzustand auszugeben, wobei Konfigurationsparameter des Approximators mittels des Verfahrens nach einem der Ansprüche 1 bis 6 konfiguriert werden.

10. Steuersystem (200) eines technischen Systems, umfassend eine Prognosevorrichtung (100) gemäß Anspruch 9,
- eine erste Schnittstelle (201), die derart eingerichtet ist, das Steuersystem an die Prognosevorrichtung zu koppeln,
- eine zweite Schnittstelle (202), die derart eingerichtet ist, einen aktuellen Systemzustand des technischen Systems einzulesen,
- eine Prognoseeinheit (203), die derart eingerichtet ist, die Prognosevorrichtung anzusteuern und mittels der Prognosevorrichtung einen zukünftigen Systemzustand des technischen Systems abhängig von dem aktuellen Systemzustand zu ermitteln,
- eine Steuereinheit (204), die derart eingerichtet ist, einen Steuerbefehl (CC) in Abhängigkeit des zukünftigen Systemzustands zu ermitteln, und das technische System gemäß dem Steuerbefehl (CC) zu steuern.

11. Computerprogrammprodukt, das direkt in einen programmierbaren Computer ladbar ist, umfassend Programmcodeteile, die bei Ausführung durch den Computer, die Schritte des Verfahrens nach einem der Ansprüche 1 bis 8 durchzuführen.

## Claims

1. Method for configuring a forecasting device for a technical system for forecasting a system state of the technical system, wherein the forecasting device is designed to forecast a physical behaviour of the technical system on the basis of a force acting on the technical system, wherein the acting force is determined by an approximator, comprising the following method steps:
a. reading in (S1) a time series of measured system states of the technical system,
b. setting configuration parameters of the approximator by iteratively
- forecasting the physical behaviour of the technical system starting from a first read-in system state by way of the forecasting device and outputting (S2) a resulting system state at a given point in time,
- ascertaining (S3) a deviation of this resulting system state from a measured system state at the given point in time,
- modifying (S4) the configuration parameters of the approximator such that the ascertained deviation is minimized until a predefined threshold value is fallen below,
- and providing (S5) the approximator modified in accordance with the ascertained configuration parameters,
wherein the approximator is in the form of an artificial neural network, and wherein the configuration parameters are values of weights of the artificial neural network,
and
c. providing the forecasting device comprising the modified approximator (S6).

2. Method according to Claim 1, wherein the physical behaviour of the technical system is forecast on the basis of a differential equation system.

3. Method according to Claim 2, wherein the physical behaviour of the technical system is forecast by solving the differential equation system starting from the first read-in system state.

4. Method according to Claim 2 to 3, wherein the artificial neural network is designed to determine the acting force on the basis of input variables of the differential equation.

5. Method according to one of the preceding claims, wherein the acting force is a non-conservative force.

6. Method according to one of the preceding claims, wherein the configuration parameters of the approximator are set iteratively by way of a stochastic gradient descent method.

7. Method for controlling a technical system by way of a forecast device provided according to one of Claims 1 to 6, comprising the following steps:
a. reading in (S10) a current system state of the technical system,
b. ascertaining (S20) a future system state on the basis of the current system state by way of the forecast device,
c. ascertaining (S30) a control command for controlling the technical system on the basis of the future system state,
and
d. outputting (S40) the control command to a control unit of the technical system.

8. Method according to Claim 7, wherein the technical system is controlled (S50) in accordance with the control command.

9. Forecast device (100) for a technical system for forecasting a system state of the technical system, which forecast device is designed to forecast a physical behaviour of the technical system on the basis of a force acting on the technical system starting from a first read-in system state, wherein the acting force is determined by an approximator (AP, NN), wherein the approximator is in the form of an artificial neural network, and wherein the configuration parameters are values of weights of the artificial neural network, and to output a resulting system state, wherein configuration parameters of the approximator are configured by way of the method according to one of Claims 1 to 6.

10. Control system (200) of a technical system, comprising a forecast device (100) according to Claim 9,
- a first interface (201) that is designed to couple the control system to the forecast device,
- a second interface (202) that is designed to read in a current system state of the technical system,
- a forecast unit (203) that is designed to actuate the forecast device and to ascertain a future system state of the technical system on the basis of the current system state by way of the forecast device,
- a control unit (204) that is designed to ascertain a control command (CC) on the basis of the future system state and to control the technical system in accordance with the control command (CC).

11. Computer program product able to be loaded directly into a programmable computer, comprising program code parts that, when they are executed by the computer, perform the steps of the method according to one of Claims 1 to 8.

## Revendications

1. Procédé de configuration d'un dispositif de prévision pour un système technique pour prévoir un état du système technique, dans lequel le dispositif de prévision est agencé de manière à prévoir un comportement physique du système technique en fonction d'une force s'appliquant au système technique, dans lequel on détermine la force s'appliquant par un approximateur, comprenant les stades de procédé
a. lecture (S1) d'une série temporelle d'états mesurés du système technique,
b. réglage de paramètres de configuration de l'approximateur, en, par itération,
- prévoyant, par le dispositif de prévision, le comportement physique du système technique à partir d'un premier état lu du système et en émettant un état résultant du système à un instant donné (S2),
- déterminant un écart de cet état résultant du système à un état mesuré du système à l'instant donné (S3),
- modifiant les paramètres de configuration de l'approximateur, de manière à minimiser l'écart déterminé (S4), jusqu'à passer en-dessous d'une valeur de seuil donnée à l'avance,
- et mettant à disposition l'approximateur modifié suivant les paramètres de configuration déterminés (S5),
dans lequel on réalise l'approximateur sous la forme d'un réseau neuronal artificiel, et dans lequel les paramètres de configuration sont des valeurs de poids du réseau neuronal,
et
c. mise à disposition du dispositif de prévision comprenant l'approximateur (S6) modifié.

2. Procédé suivant la revendication 1, dans lequel on prévoit le comportement physique du système technique sur la base d'un système d'équation différentielle.

3. Procédé suivant la revendication 2, dans lequel on prévoit le comportement physique du système technique par résolution du système d'équation différentielle à partir du premier état lu du système.

4. Procédé suivant la revendication 2 à 3, dans lequel le réseau neuronal artificiel est agencé pour déterminer la force, qui s'applique en fonction de grandeurs d'entrée de l'équation différentielle.

5. Procédé suivant l'une des revendications précédentes, dans lequel la force, qui s'applique est une force non conservative.

6. Procédé suivant l'une des revendications précédentes, dans lequel on effectue le réglage par itération des paramètres de configuration de l'approximateur, au moyen d'un procédé stochastique à descente de gradient.

7. Procédé de commande d'un système technique au moyen d'un dispositif de prévision mis à disposition suivant les revendications 1 à 6, comprenant les stades :
a. lecture (S10) d'un état en cours du système technique,
b. détermination (S20) d'un état à venir du système en fonction de l'état en cours du système au moyen du dispositif de prévision,
c. détermination (S30) d'une instruction de commande pour la commande du système technique, en fonction de l'état à venir du système,
d. envoi (S40) de l'instruction de commande à une unité de commande du système technique.

8. Procédé suivant la revendication 7, dans lequel on commande le système technique suivant l'instruction de commande (S50).

9. Dispositif (100) de prévision pour un système technique pour la prévision d'un état du système technique, qui est agencé pour prévoir un comportement physique du système technique en fonction d'une force s'appliquant au système technique, à partir d'un premier état lu du système, dans lequel on détermine la force, qui s'applique par un approximateur (AP, NN), dans lequel on réalise l'approximateur sous la forme d'un réseau neuronal artificiel, et dans lequel les paramètres de configuration sont des valeurs de poids du réseau neuronal artificiel et on émet un état résultant du système, dans lequel on configure les paramètres de configuration de l'approximateur au moyen du procédé suivant l'une des revendications 1 à 6.

10. Système (200) de commande d'un système technique, comprenant un dispositif (100) de prévision suivant la revendication 9,
- une première interface (201), qui est agencée pour relier le système de commande au dispositif de prévision,
- une deuxième interface (202), qui est agencée pour lire un état en cours du système technique,
- une unité (203) de prévision, qui est agencée pour commander le dispositif de prévision et pour déterminer, au moyen du dispositif de prévision, un état à venir du système technique en fonction de l'état en cours du système,
- une unité (204) de commande, qui est agencée pour déterminer une instruction (CC) de commande en fonction de l'état à venir du système et pour commander le système technique suivant l'instruction (CC) de commande.

11. Produit de programme d'ordinateur, qui peut être chargé directement dans un ordinateur programmable, comprenant des parties de code de programme qui, lorsqu'elles sont réalisées par l'ordinateur, effectuent les stades du procédé suivant l'une des revendications 1 à 8.
